# EUROPÄISCHE PATENTANMELDUNG

(11) **EP 0 760 353 A1**
(43) Veröffentlichungstag der Anmeldung: **05.03.1997**
(21) Anmeldenummer: 95113610.0
(22) Anmeldetag: 30.08.1995
(51) Int. Cl.: C04B 28/26, C04B 41/50, C09K 17/46

(54) **Masse auf Wasserglasbasis für Dichtungszwecke, sowie Verfahren zur Härtung von Wasserglasmassen**

(71) Anmelder: Schanze, Rudolf, D-41379 Brüggen (DE)
(72) Erfinder: Schanze, Rudolf, D-41379 Brüggen (DE)
(74) Vertreter: Büchel, Kurt F., Dr.

(57) **Zusammenfassung**

Eine Masse auf Wasserglasbasis bestehend aus einer rein anorganischen Komponente A aus Alkali-Silikat mit geringer Viskosität und hohem Kieselsäureanteil und einer Komponente B mit mindestens einem schnellen Härter, vorzugsweise aus der Gruppe der Kohlensäureester, sowie mindestens einem weiteren, langsameren Härter als Härtungsverzögerer, vorzugsweise aus der Gruppe der Dialkyldicarbonsäureester, insbesondere Dimethylsuccinat, Dimethylglutarat, und/oder Dimethyladipat, sowie gegebenenfalls weiteren Zusätzen wie Verflüssigern, Thixotropiemitteln, Gleit- und Füllstoffen und dergleichen.

Verfahren zur Härtung einer Masse auf Wasserglasbasis und Verwendung einer solchen Masse zur Abdichtung von Rohrleitungen, Kanälen und Behältnisssen, zur Bodenverfestigung, Beschichtung und Imprägnierung von Materialien, sowie zur Produktion von Formkörpern.

## Beschreibung

Die Erfindung betrifft eine Masse auf Wasserglasbasis zur Abdichtung von Rohrleitungen und Behältnissen, zur Bodenverfestigung sowie zur Beschichtung oder Imprägnierung von Materialien und Gegenständen und zur Herstellung von Formkörpern, sowie Verfahren zur Härtung einer Masse auf der Basis von Wasserglas und deren Verwendung.

Eine derartige Masse zur Befestigung von Dübeln und dergleichen in Hohlräumen ist beispielsweise in der europäischen Patentanmeldung EP 0 641 748 A1 beschrieben, die hiermit per Referenz in vollem Umfang in die vorliegende Offenbarung mit eingeschlossen sein soll. Als Nachteil der dort beschriebenen Masse für einen Einsatz zum Dichten von Leckagen in Rohrleitungen hat sich die relativ lange Topfzeit von 15 Minuten und darüber, die zwingende Anwesenheit von einem zusätzlichen, hochaktiven Reaktionspartner wie feinkörnigem Siliciumdioxid (SiO₂) oder Aluminiumoxid (Al₂O₃) sowie von Füllstoffen, und die eher komplizierte und nicht immer befriedigend reproduzierbare Einstellbarkeit von verschiedenen Topfzeiten herausgestellt. Ausserdem ist das bewusst gering gewählte Verhältnis von SiO₂ zu Alkalioxid in der Wasserglaskomponente, welches im Bereich von 1.4 bis 2 liegt, für Anwendungen gemäss der vorliegenden Erfindung ungünstig, insbesondere für Anwendungen nach einem zweistufgen Verfahren.

EP 345 364 A1 beschreibt ein Verfahren zur Verbesserung der Festigkeit und Undurchlässigkeit von Böden und Baukonstruktionen einschliesslich von Tanks und Kanälen, wobei eine Masse auf Wasserglasbasis zur Anwendung kommt, die neben hohen Wasserglasgehalten (ca. 15-40 Gew.% Trockensubstanz) noch zusätzlich ca. 5-50 Gew.% (Trockensubstanz) eines Kieselsäure-Sols, dispergiert in einem zumindestens teilweise (mindestens 10 Vol.%) organischen Medium. Als Beispiele für das organische Medium werden Ester, Diacetale, Amide, z.B. auch Propylencarbonat aufgeführt. Der Nachteil dieser Erfindung wird u.a. darin gesehen, dass dem Fachmann in keiner Weise offenbart wird, durch welche Massnahmen man eine voraussagbare Veränderung der Topfzeit erreichen kann. Darüber hinaus ist ein Zusatz von Kieselsäuresol gemäss der vorliegenden Erfindung weder vorgesehen noch erwünscht.

In FR 1.600.298 wird eine verbesserte Zusammensetzung auf Wasserglasbasis zur Verfestigung und Wasserabdichtung von sandigen Böden offenbart. Allerdings werden hier als Härter Mischungen aus einer Mineralsäure wie Salz-, Schwefel- oder Phosphorsäure und einem organischen Reagenz wie Formamid, Isopropyl-, Isobutylacetat oder Glykolmonochlorhydrin eingesetzt. In Anbetracht der Einsatzzwecke der Wasserglasmasse und ihrer - gemäss vorliegender Erfindung - gegebenenfalls getrennt nacheinander erfolgenden Anwendung von Wasserglaskomponente und Härter, beispielsweise zur Abdichtung von Kanälen und Rohrleitungen aus Beton oder Gusseisen, ist der Einsatz derartiger korrosiver Komponenten riskant und daher unerwünscht. Ausserdem werden in FR 1.600.298 Wasserglasmassen mit langen Topfzeiten von 12 Minuten bis mehr als 3 Stunden offenbart. Gemäss der vorliegenden Erfindung sind jedoch auch Topfzeiten im Bereich von Sekunden erwünscht und notwendig. Eine solche Lehre wird in FR 1.600.298 jedoch nicht vermittelt.

US 4,056,937 beschreibt ein Injektionsverfahren zur Bodenverfestigung ohne Verschmutzung des Erdreiches oder des Grundwassers. Dieses Ziel wird vornehmlich dadurch erreicht, dass - im Gegensatz zu den üblichen Anwendungsformen - zuerst die Härterkomponente und/oder ein Geliermodifikator vorgelegt und dann die Wasserglaskomponente zudosiert wird. Dadurch wird verhindert, dass der pH-Wert in einen stark alkalischen Bereich abdriftet. US 4,056,937 gibt weiters eine verwirrende Anzahl von Beispielen an, in denen Gelierzeiten im Bereich von Sekunden bis Stunden erreicht werden. Es ist aber von grossem Nachteil für die Anwendungen gemäss der vorliegenden Erfindung, dass die Wasserglasmassen von US 4,056,937 durchwegs einen Wassergehalt von 80 Gew.% und darüber aufweisen. Auf Wasserglas als Trockensubstanz bezogen liegen die Wassergehalte bei 500-7300 Gewichtsteile Wasser pro 100 GWT Wasserglas. Ein so hoher Wasseranteil würde die Verwendung zur Dichtung von Leckagen in Rohrleitungen praktisch unmöglich machen oder zumindest zu einem hohen Verlust an Chemikalien und gleichzeitig erheblicher Umweltverschmutzung führen, da die niedrige Viskosität der Masse durch den hohen Wassergehalt erzielt wird, was in der vorliegenden Erfindung ausdrücklich unerwünscht ist und daher vermieden wird.

Diese Nachteile der bekannten Massen auf Wasserglasbasis können nun durch die verschiedenen Ausführungsformen der Masse gemäss der vorliegenden Erfindung erfolgreich überwunden werden.

Durch die Wahl geeigneter Molverhältnisse zwischen Kieselsäure und Alkalioxid wird in Abhängigkeit der jeweils eingesetzten Wasserglastype - Natrium-, Kalium-, Lithiumwasserglas oder eine Mischung daraus - bereits der Grundstein für die späteren Verarbeitungs-, Härtungs- und Beständigkeitseigenschaften gelegt. Dabei zeigen die verschiedenen Wasserglastypen unterschiedliche Verhaltensweisen. Während beispielsweise reines Natriumwasserglas mit einer der erfindungsgemässen Härtermischungen in wenigen Sekunden zu gelieren beginnt, kann dies mit derselben Härtermischung bei Kaliumwasserglas mehrere Minuten dauern.

Die erfindungsgemässe Masse ist im wesentlichen ein Zweikomponentensystem bestehend aus einer Wasserglas-Komponente A und einer Härter-Komponente B. Die Komponente A enthält ein rein anorganisches, alkalisches Wasserglas mit einem Molverhältnis SiO₂:Alkalioxid von 2.1 - 4. Es kann reines Natrium-, Kalium- oder Lithiumsilikat oder eine Mischung aus zwei oder allen drei Komponenten verwendet werden; aufgrund des niedrigeren Preises, der schnelleren Härtung und der besseren Verarbeitbarkeit unter den Bedingungen der vorliegenden Erfindung ist aber Natriumsilikat bevorzugt. Wesentlich für die Erfindung ist auch der relativ geringe Gesamtwassergehalt von 10-60 Gew.% sowie der hohe Gehalt an Kieselsäure im Bereich von 7 bis 42 Gew.%, der der erfindungsgemässen Masse eine charakteristische Klebrigkeit bei gleichzeitig gutem Fliessverhalten beschert, was vor allem bei Anwendungen zu Dichtungszwecken von besonderem Vorteil ist. Je nach Zusammensetzung und damit verbundenem Anwendungszweck der Masse kann der Kieselsäuregehalt innerhalb dieser Grenzen variieren, wobei beispielsweise für zusatzfreie Wasserglasmassen im Regelfall höhere Kieselsäuregehalte von Vorteil sind, während für solche Massen, die zusätzlich grössere Mengen an z.B. Füllstoffen, Gleitmittel, und dgl. enthalten, die geringeren Kieselsäuregehalte für den angestrebten Effekt zumeist ausreichend sind.

Für manche Anwendungen kann es aber auch notwendig sein, weitere Anpassungen des Kieselsäuregehaltes innerhalb des angegebenen Rahmens vorzunehmen. Dies kann beispielsweise bei Einsätzen, wo entweder durch Umgebungswasser Verdünnungseffekte eintreten könnten oder wo das Zweikomponenten-System bereits vor der eigentlichen Anwendung zusammengemischt wird, etwa zur Beschichtung von Materialien, zur Herstellung von Formkörpern oder zur Bodenverfestigung, gelegentlich erforderlich sein.

Die Verarbeitung und Anwendung der Masse wird erleichtert, wenn man die Wasserglaskomponente (Komponente A) auf eine geringe Viskosität im Bereich von 20-100 mPa·s (bei 20°C) und beispielsweise für die Anwendung zu Dichtungszwecken vorteilhafterweise auf ca. 40-60 mPa·s einstellt. Solche geringen Viskositäten erlauben - insbesondere bei einem zweistufigen Anwendungsverfahren - das Eindringen der A-Komponente selbst in feine Risse und kleinste Leckagen.

Die Aushärtung bei Raumtemperatur bzw. in einem Verarbeitungsbereich von -10°C bis +40°C, vorzugsweise +5°C bis +25°C, wie es beispielsweise bei Anwendungen zur Kanalabdichtung gewöhnlich der Fall ist, kann nur durch den Einsatz von Härtern erzielt werden. Die erfindungsgemässe Masse enthält daher als Komponente B mindestens zwei verschiedene, als Härter wirkende Verbindungen, wobei Art und Menge dieser Härter entscheidenden Einfluss auf die Produkt- und Verarbeitungsqualitäten der Masse haben. Ihr Auffinden nach zahlreichen - weitgehend empirischen - Versuchen hat erheblich zu den erfindungsgemässen Zusammensetzungen der im nachfolgenden offenbarten Wasserglasmassen beigetragen.

Es hat sich gezeigt, dass für die vorgesehenen Anwendungsfälle eine Mischung aus mindestens einem schnell wirkendenen Härter und mindestens einem anderen, langsamer wirkenden Härter, der die Funktion eines Härtungsverzögerers einnimmt, zu den besten Ergebnissen führt. Als schnelle Härter werden hierin solche Härter verstanden, die in der Lage sind, Wasserglas innerhalb von ca. 5 bis ca. 600 Sekunden zum Gelieren zu bringen, als langsame Härter bzw. als Härtungsverzögerer solche, die - allein eingesetzt - länger als 10 Minuten zum Auslösen des Geliervorganges benötigen.

Es ist bekannt, dass Salze oder Ester, die unter der stark alkalischen Wirkung des Wasserglases eine stärkere Säure als die Kieselsäure abspalten und unter Bildung deren Alkalisalzes feindisperse Kieselsäure ausfällen, zu Produkten mit hoher Festigkeit führen. Einige davon sind auch für die vorliegende Erfindung als schnelle Härter geeignet, vor allem die zyklischen Kohlensäureester wie z.B. Ethylencarbonat, Propylencarbonat und Butylencarbonat (Kohlensäure ist schon eine stärkere Säure als die Kieselsäure). Sie können einzeln oder in verschiedenen Mischungen miteinander eingesetzt werden und bestimmen damit vor allem die untere Grenze der erreichbaren Reaktionszeiten bis zum Einsetzen des Gelierens, also die kürzesten Topfzeiten bzw. den raschest möglichen Beginn der Härtephase. Daneben beeinflussen oder verursachen sie aber auch die Schaumbildung bei der Verarbeitung bzw. Anwendung der Masse, sodass auch diesem Punkt bei der Auswahl des schnellen Härters eine nicht unbedeutende Rolle zukommt.

Neben den genannten und anderen Estern und Salzen können gemäss der vorliegenden Erfindung aber auch Lactone (z.B. γ-Butyrolacton) und Lactame (z.B. ε-Caprolactam), deren Grundkörper strukturell den Kohlensäureestern sehr ähnlich ist, mit gutem Erfolg als schnelle Härter eingesetzt werden, ebenso wie anorganische oder organische Säuren, Säureanhydride, Nitrile, Säureamide und Säurechloride.

Wesentlich für die vorliegende Erfindung ist, dass die sehr kurzen Reaktionszeiten (im Bereich von ca. 10 Sekunden bis zu wenigen Minuten) bis zum Einsetzen des Gelierens, verursacht durch die Wirkung der schnellen Härter, gezielt und reproduzierbar verlängert werden können. Diese kontrollierte Steuerung der Reaktionszeiten gelingt in erster Linie durch den Zusatz von mindestens einem Härtungsverzögerer, der die Wirkung des schnellen Härters dämpft.

Grundsätzlich lässt sich die Variation bzw. Einstellung einer gewünschten Topfzeit zwar bereits allein durch die entsprechende Wahl des schnelle Härters und des Härtungsverzögerers bewerkstelligen, bessere Genauigkeit und Verlässlichkeit bietet aber die definierte Veränderung des Mengen- bzw. Gewichtsverhältnisses von ausgewähltem, schnellem Härter und Härtungsverzögerer zueinander. Je nach Art des Wasserglases und der gewählten Kombination von schnellem Härter und Härtungsverzögerer können deren Verhältnisse zueinander im Bereich von 1:0.05 bis 1:50 (Härter:Härtungsverzögerer) eingestellt werden, um so die gewünschte Topfzeit zu gewährleisten.

Als geeignete Härtungsverzögerer können langsamer reagierende Verbindungen aus derselben Gruppe, aus der auch die schnellen Härter stammen, erfolgreich eingesetzt werden. In vielen Fällen besonders bewährt hat sich jedoch die Verwendung von Dialkyldicarbonsäureestern, wie beispielsweise Dimethylsuccinat, Dimethylglutarat und/oder Dimethyladipat.

Zusätzlich zu den Hauptkomponenten Wasserglas, Härter und Härtungsverzögerer kann die erfindungsgemässe Masse noch weitere Komponenten enthalten, wie beispielsweise Verflüssiger, Thixotropiemittel, Gleitmittel, Füllstoffe, Entschäumer und dergleichen.

In Fällen, wo zum Zwecke einwandfreier Verarbeitung sehr gute Fliesseigenschaften der Masse auf Wasserglasbasis gefragt sind, also beispielsweise beim Abdichten von kleineren Leckagen, ist die Zusammensetzung der erfindungsgemässen Masse so zu wählen, dass auch die B-Komponente eine extrem niedrige Viskosität aufweist. In solchen Fällen haben sich für die B-Komponente dynamische Viskositäten im Bereich von 1-10 mPa·s, als vorteilhaft erwiesen, wobei für die meisten erfindungsgemässen Mischungen an Härter und Härtungsverzögerer eine Viskosität von 4-6 mPa·s zum gewünschten Erfolg führt.

Es ist dabei von erheblichem Vorteil, die Gelierzeit der Wasserglasmasse auf den jeweiligen Fall optimal einstellen zu können, beispielsweise auch im Bereich von Sekunden, wobei Füllstoffe gegebenenfalls unerwünscht sein können.

Aufgrund ihres relativ gut bekannten Reaktionsverhaltens und ihrer leichten Verfügbarkeit sind in einer Vielzahl von Anwendungsfällen die zyklischen Kohlensäurester, insbesondere Ethylencarbonat, Propylencarbonat und Butylencarbonat die schnellen Härter der Wahl, entweder einzeln eingesetzt oder als Mischung mindestens zweier dieser Carbonate. Sie gehören zu den schnellst wirksamen Härtern und sind daher in Zusammensetzungen mit besonders kurzer Reaktionszeit in wesentlich höheren Anteilen als der oder die Härtungsverzögerer anwesend.

Gemäss einer weiteren Ausführungsform der vorliegenden Erfindung wird als Härtungsverzögerer eine auch im Handel erhätliche Mischung aus 15-25 Gew.% Dimethylsuccinat (richtiger: Bernsteinsäuredimethylester), 55-65 Gew.% Dimethylglutarat (Glutarsäuredimethylester) und 12-23 Gew.% Dimethyladipat (Adipinsäuredimethylester) verwendet. Diese Mischung aus Dialkyldicarbonsäureestern - im nachfolgenden als DACS-Mischung bezeichnet - hat sich in Hinblick auf eine beinahe minutiös genau einstellbare Topfzeit als ausserordentlich günstig herausgestellt, insbesondere in Kombination mit Propylencarbonat als alleinigem schnellen Härter. Auch das Viskositätsverhalten und die gegenüber der Verwendung von Ethylencarbonat wesentlich geringere Schaumbildung lassen sich mit der DACS-Mischung in Kombination mit Propylencarbonat gut beherrschen und steuern.

In der Mehrzahl der Anwendungsfälle führt eine erfindungsgemässe Masse mit einer Zusammensetzung von rund 90-350 Gewichtsteilen (GWT) Wasser und 15-125 GWT Härter inklusive Härtungsverzögerer bezogen auf 100 GWT Wasserglaskomponente (gerechnet als Feststoffanteil, d.h. Trockensubstanz) zum gewünschten Resultat. Vorzugsweise für einstufige Anwendungen können die besten Konzentrationsbereiche auf 150-230 GWT Wasser und 25-75 GWT Härter/Härtungsverzögerer je 100 GWT Wasserglas-Trockensubstanz eingegrenzt werden.

Es ist auch möglich und für manche Einsätze, beispielsweise bei grösseren Baustellen oder aus Gründen der vorhandenen Ausrüstung zur Verarbeitung der erfindungsgemässen Masse vor Ort, von Vorteil, dass die Bestandteile der B-Komponente, also Härter und/oder Härtungsverzögerer, nicht in flüssiger, sondern in Pulverform oder in pseudopulverisierter Form eingesetzt werden. Zu diesem Zweck können flüssige Härter und/oder Härtungsverzögerer an ein geeignetes Trägermaterial, beispielsweise SIPERNAT ® als hochdisperse Kieselsäure, adsorbiert sein. Es ist dann natürlich bei der Bemessung der Konzentration an Härter/Härtungsverzöger die Menge des ausserdem eingebrachten Trägermaterials (Verdünnungseffekt) entsprechend zu berücksichtigen. Das Verhältnis von Trägermaterial zu Härter und/oder Härtungsbeschleuniger kann beispielsweise 50:50 betragen, sodass dann die doppelte Menge an Pulver einzusetzen ist, um die gewünschte Menge an Härter/Härtungsverzögerer zu erhalten.

Durch Erhöhung des Feststoffanteiles in der Masse und/oder durch Erhöhung des Anteiles an DACS-Mischung gegenüber schnellem Härter steigt im Normalfall die Viskosität der Mischung an. Es kann daher in vielen Fällen von Vorteil oder sogar notwendig sein, einen Verflüssiger zuzusetzen, um die eingangs erwähnten Viskositäten und Fliesseigenschaften der erfindungsgemässen Massen zu gewährleisten. Ausserdem bewirkt der Verflüssiger, dass das Verhältnis Wasserglas zu Füllstoff(en) verringert, werden kann; durch den höheren Füllstoffanteil ergeben sich ein geringerer Schwund (was vor allem bei der Abdichtung von grösseren Lecks von Vorteil ist) und eine höhere Festigkeit.

Umgekehrt kann es in anderen Fällen wiederum günstig sein, eine zur Erreichung der gewünschten Produkteigenschaften sehr niedrigviskos eingestellte Masse zum Zwecke der Verarbeitung vor Ort, beispielsweise um bei unebenen Flächen ein Weg- oder Zurückfliessen bzw. Abtropfen zu verhindern, mittels eines Thixotropiemittels zu stabilisieren. Es gibt aber auch Anwendungsfälle, wo die gleichzeitige Anwesenheit von Verflüssiger und Verdünner in der Masse von Vorteil ist, etwa beim Arbeiten über Kopf.

Vorteilhafterweise werden Verflüssiger - je nach Anwendungsfall und gewünschtem Anteil an weiteren Zusätzen - in Mengen zwischen 0 und 115 GWT, vorzugsweise von etwa 10-60 GWT, und gegebenenfalls Thixotropiemittel in Mengen zwischen 0 und 115 GWT, vorzugsweise von etwa 20-85 GWT, bezogen auf 100 GWT Wasserglas (Trockensubstanz), eingesetzt. Bei Bedarf können ausserdem noch zwischen 0 und 570 GWT an Zusätzen wie Entschäumern, Gleitmitteln, Farbmitteln und/oder Füllstoffen hinzugefügt werden.

Als Verflüssiger bewährt hat sich beispielsweise eine auch im Handel erhältliche Silanemulsion wie z.B. die unter der Bezeichnung WS 431 von Degussa vertriebene Silan-Emulsion (Silikonemulsionen sind weniger vorteilhaft; sie trocknen schlecht und verringern die Haftfestigkeit); als Thixotropiemittel hat sich hingegen Bentonit, vorzugsweise alkalisch aktivierter Bentonit, für viele Fälle als besonders günstig erwiesen; beispielsweise das unter der Bezeichnung OPTIGEL^{(R)}CK der Firma Süd-Chemie AG, München, hergestellte hochthixotrope Geliermittel, ein weisses, freifliessendes Pulver.

In einer weiteren Ausführungsform enthält die erfindungsgemässe Masse ausserdem etwa 15-85, vorzugsweise etwa 40-60 GWT eines Gleitmittels. Bisher verwendete Glykole oder Tenside (die auch eine Verflüssigung, bzw. Viskositätserniedrigung begünstigen), sind nachteilig, weil sie die Wasserfestigkeit der Fertigmischung beeinträchtigen. Als besonders zweckmässig hat sich hingegen der Zusatz von feinst dispersem Titandioxid erwiesen, möglicherweise infolge der im stark alkalischen Milieu gebildeten Titanate. Dieser Zusatz erleichtert beispielsweise das Gleiten der Masse durch Rohrleitungen aber auch das Herauspressen der Fertigmischung aus Mischanlagen, Vorratsbehältern oder Kartuschen.

In manchen Fällen ist es günstig, der erfindungsgemässen Masse auch noch einen oder mehrere Füllstoffe zuzusetzen, etwa um - neben einer verkürzten Reaktionszeit - bessere Festigkeitswerte, z.B. für die Bodenstabilisierung, zu erzielen oder um bestimmte Produkteigenschaften zur Beschichtung von Baumaterialien zu erreichen, oder aber um Formkörpern, die aus solchen Massen beispielsweise durch übliche Verfahren der Kunststoffbearbeitung hergestellt werden können, bestimmte physikalische Eigenschaften zu verleihen. So lassen sich z.B. durch eine Mischung von gröberem Quarzsand, beispielweise Korngrösse 0,4 mm, und feinem Quarzmehl (insbesondere Quarzmehl W6) die beim Extrudieren oder Spritzgiessen entstehenden Hohlräume der Wasserglasmasse besser ausfüllen, sodass kompakte, massive, im wesentlichen nicht expandierte Formkörper herstellbar sind. Die Menge an Füllstoffen wird vorteilhafterweise innerhalb eines Bereiches von etwa 50-570 GWT, bezogen auf 100 GWT WasserglasTrockensubstanz, variiert.

Es hat sich ausserdem gezeigt, dass der bisher üblicherweise verwendete Quarzsand von z.B. 0,1 - 0,25 mm von zu kleiner Korngrösse ist und eher zum Schwinden neigt, während grössere Körner von 0,4 mm sich besser verkeilen und damit auch die Auszugfestigkeit erhöhen. Noch grössere Körnungen sind aber wiederum nicht mehr so gut, weil sie gegebenenfalls das lückenlose Ausfüllen von Leckagen nicht mehr hundertprozentig gewährleisten würden.

Das Verhältnis von grobkörnigem zu feinkörnigem Füllstoff ist auf den jeweiligen Anwendungszweck und den verwendeten Wasserglas-Typus hin abzustimmen. Im Fall von reinem Kaliwasserglas hat sich beispielsweise für einige Anwendungen ein Verhältnis von 7:1 Quarzsand:Quarzmehl als günstig erwiesen, bei Verwendung eines Natrium-/Kalium-Wasserglases hingegen ein Verhältnis von 7:5.

Die vorliegende Erfindung bezieht sich auch auf Verfahren zur Herstellung und Härtung der hierin beschriebenen Massen. Grundsätzlich kann die Wasserglasmasse entweder unabhängig vom Ort der Anwendung vollständig zusammengemischt und erst danach - im Regelfall innerhalb der Topfzeit - bearbeitet (z.B. geformt), verarbeitet oder in geeigneter Weise verwendet werden (einstufiges Verfahren), oder aber das Zwei-Komponenten-System wird getrennt von einander zugeführt und - üblicherweise direkt am Anwendungsort - zur Reaktion gebracht (zweistufiges Verfahren). Die getrennte Zufuhr der Wasserglas- und der Härterkomponente kann gleichzeitig oder nacheinander erfolgen, wobei im Falle der nacheinander erfolgenden Zufuhr vorzugsweise zuerst die Wasserglaskomponente und danach die Härterkomponente dosiert wird.

Im einstufigen Verfahren wird die Wasserglas-Komponente A, vorzugsweise reines Natriumwasserglas, mit einem Molverhältnis SiO₂:Alkalioxid von 2.1 - 4 und vorzugsweise einer Viskosität (bei 20°C) von 20-100 mPa·s, gegebenenfalls unter Rühren und/oder zusammen mit einem Verflüssiger sowie gegebenenfalls weiteren Zusätzen wie Thixotropiemitteln, Gleitmitteln, Füllstoffen Entschäumer und/oder sonstigen Zusätzen, vorgelegt;
anschliessend wird Komponente B mit mindestens einem schnell wirkenden organischen Härter aus der Gruppe der Ester, Lactone, Lactame, anorganischen oder organischen Säuren, Säureanhydride, Nitrile, Säureamide, und Säurechloride, vorzugsweise mindestens einem zyklischen Kohlensäureester aus der Gruppe Ethylencarbonat, Propylencarbonat und Butylencarbonat zugesetzt;
gegebenenfalls wird - als Teil der B-Komponente - dem schnellen Härter noch zusätzlich als Härtungsverzögerer mindestens ein anderer, langsamer wirkender Härter aus derselben Gruppe, vorzugsweise mindestens ein Dialkyldicarbonsäureester, insbesondere Dimethylsuccinat, Dimethylglutarat und/oder Dimethyladipat, gegebenenfalls unter leichtem Überdruck und/oder stärkerem Rühren hinzugefügt,
so dass sich ein Gesamtwassergehalt von 10-60 Gew.% und ein Kieselsäureanteil von 7-42, vorzugsweise 12-24 Gew.% ergibt und die Masse spontan, innerhalb einer für ihre Zusammensetzung und die gewählten Reaktionsbedingungen - insbesondere Reaktionstemperatur - typischen Reaktionszeit (Topfzeit) zu gelieren beginnt und danach aushärtet.

Im zweistufigen Verfahren kann das Rühren zumeist vollständig entfallen, ersatzweise kann dafür die Komponente A, gegebenenfalls zusammen mit den erwähnten Zusätzen, unter einem leichten Überdruck vorgelegt werden, beispielsweise in einer zu sanierenden Rohrleitung, in einem Öl- oder Wassertank oder in vielen Fällen der Bodenverfestigung. Anschliessend wird dann die B-Komponente, also Härter und gegebenenfalls Härtungsverzögerer auf die selbe Art und Weise dazugegeben, vorzugsweise wieder mit leichtem Überdruck, um auf diese Weise eine bestmögliche Durchdringung der A- und B-Komponenten zu ermöglichen und eine stabile und dauerhafte Abdichtung der Leckage bzw. Stabilisierung des verfestigten Erdreiches zu erreichen.

Es hat sich überraschenderweise gezeigt, dass durch den Kontakt der B-Komponente mit der vorgelegten A-Komponente nicht sofort eine Verhärtung der obersten Schicht erfolgt, was ein Eindringen des Härters in tiefere Schichten verhindern könnte, sondern dass die Härterkomponenten dem Wasserglas offenbar "nachkriechen" und so die gewünschte Tiefenwirkung und stabile Leckabdichtung oder Bodenverfestigung ermöglichen.

Eine spezielle Ausführungsform des erfindungsgemässen Verfahrens zur Herstellung und Härtung der Wasserglasmasse, insbesondere für Abdichtungszwecke an undichten Kanalrohren oder anderen Rohrleitungen, Rohrleitungsverbindungen und undichten Behältnissen, insbesondere solchen, die in unmittelbarem Kontakt mit Erdreich oder Mauerwerk stehen, wird dadurch gekennzeichnet, dass
- die Komponente A - gegebenenfalls zusammen mit einem Verflüssiger und/oder weiteren Zusätzen wie Thixotropiemitteln, Gleitmitteln, Füllstoffen und/oder sonstigen Zusätzen - unter einem Überdruck von 0,5-2 m Wassersäule in die Rohrleitung, den Kanal, oder das Behältnis, vorzugsweise in einen abgesperrten Bereich derselben, eingebracht wird;
- überschüssiges Material nach einer gewünschten Haltezeit wieder entfernt wird;
- die Rohrleitung oder der Kanal mit Wasser gespült wird, zwecks Entfernung von unerwünschten Resten der A-Komponente von den Innenwänden der Rohrleitung, des Kanals oder des Behältnisses;
- die Komponente B, also Härter und gegebenenfalls Härtungsverzögerer, je nach gegebener Situation und Bedarf, vielfach jedoch unter einem Überdruck von 0,5-2 m Wassersäule, in die Rohrleitung oder den Kanal eingebracht wird; und
- nach einer gewünschten Haltezeit überschüssiges Material entfernt wird;
so dass die Masse spontan, innerhalb einer für die Zusammensetzung der Masse und die gewählten Reaktionsbedingungen typischen Reaktionszeit (Topfzeit) geliert und aushärtet und die Leckage dauerhaft und chemisch widerstandsfähig abdichtet.

Durch dieses zweistufige Verfahren zum Dichten von Leckagen wird entweder unerwünschter Flüssigkeitsaustritt aus der Leitung, dem Kanal oder Behältnis in die Umgebung oder umgekehrt Eindringen von Flüssigkeit aus der Umgebung in eine undichte Röhre oder ein Behältnis wirksam und dauerhaft verhindert. Bevorzugt einsetzbar ist dieses Verfahren überall dort, wo alle bisher bekannten Systeme nicht angewandt werden können, insbesondere in Leitungen mit Nennweiten kleiner als ca. 150 mm (< DN 150), bei Biegungen, unter Fabrikhallen, im Hausentwässerungsbereich und dergleichen. Es können damit alle bekannten Rohrmaterialien wie z.B. Steinzeug, Beton, Faserzement, PVC, Gusseisen, etc. abgedichtet werden. Besonders gut eignet sich dieses Verfahren zum Abdichten von Längs- und Radialrissen, zum Verfüllen von undichten Rohrverbindungen (z.B. Muffen), bei fehlenden Dichtungen und ähnlichen Undichtigkeiten in Leitungssystemen. Die Dichtungsmasse bleibt auch nach Aushärtung innerhalb gewisser Grenzen flexibel, sodass kleinere mechanische Zug- und/oder Druckbelastungen, sowie Erschütterungen die Dichtung nicht beschädigen.

Analog lässt sich dieses Verfahren auch zum Sanieren von undichten Behältnissen, beispielsweise von Kesseln und Tanks, die mit Erdreich oder Mauerwerk direkt oder indirekt in Kontakt stehen oder sogar teilweise oder vollständig darin eingebettet sind (z.B. Öltanks, Wassertanks, andere Flüssigkeits- und gegebenenfalls Gasbehälter), von Brunnenschächten, Schwimmbecken, Gartenteichen und dergleichen, erfolgreich einsetzen.

Durch Reduktion des Wasseranteils gegenüber den Feststoffen und/oder durch Erhöhung der Konzentration an Härter und Härtungsverzögerer sowie durch Erhöhung der Temperatur kann die Reaktionszeit bis zum Beginn des Gelierens verkürzt werden. Solche Massnahmen können beispielsweise für Dichtungsvorgänge, die sehr rasch abgeschlossen sein müssen, von grossem Vorteil sein. Gegebenenfalls kann sogar durch die chemischen Reaktionen beim Zusammenmischen der A- und der B-Komponenten bereits eine erhebliche Wärmeentwicklung erfolgen, was die Reaktion nochmals beschleunigt.

Eine weitere Möglichkeit zur Variation, beispielsweise Verkürzung, der Topfzeit - die in der Mehrzahl der Fälle angewandt wird - besteht darin, dass man - wie bereits weiter oben erwähnt - das Verhältnis von Härtungsverzögerer zu schnellem Härter verändert, z.B. reduziert. Der Vorteil dieser Methode besteht in erster Linie in der Zuverlässigkeit der Topfzeiteinstellung dank überschaubarer und klar definierter Variation von praktisch nur einem Parameter, nämlich dem Verhältnis Härter zu Härtungsverzögerer. Eine Kombination der verschiedenen Möglichkeiten (z.B. Temperatur, Härterkonzentration, Gesamt-Feststoffgehalt, Wassergehalt, Verhältnis Härter/Härtungsverzögerer) kann unter Umständen zu einer Verschlechterung der Reproduzierbarkeit des Verfahrens führen.

In einer der möglichen Ausführungsformen des ein- oder zweistufigen Verfahrens wird die Härter/Härtungsverzögerer-Komponente nicht in flüssiger Form sondern in Pulverform eingesetzt. Es kann sich dabei um eine Mischung eines geeigneten Trägermaterials mit dem jeweiligen Härter und/oder Härtungsverzögerer handeln, wobei sich SIPERNAT® als Trägermaterial in einer 50:50 Gew.% Mischung mit dem Härter/Härtungsverzögerer gut bewährt hat.

In einer weiteren Ausführungsform bezieht sich das Verfahren auf die Herstellung einer Masse welche - bezogen auf 100 GWT Wasserglas (als Trockensubstanz) - 150-230 GWT, insbesondere rund 185 GWT, Wasser und 25-60 GWT, insbesondere rund 32 GWT, Härter inklusive Härtungsverzögerer enthält, wobei durch Variation der Mengenverhältnisse von Härter(n) und Härtungsverzögerer(n) zueinander die Reaktionszeit innerhalb eines Bereiches von wenigen Sekunden bis mehr als eine Stunde gesteuert wird.

Die Erfindung wendet sich im weiteren auch an die Verwendung der hierin beschriebenen Massen für Zwecke, die über die voher beschriebene Abdichtung von Leckagen hinausgehen. Beispielsweise können eine oder mehrere der hierin explizit oder implizit offenbarten Massen dazu verwendet werden, um auf eine umweltverträgliche Art und Weise eine chemisch beständige Bodenverfestigung herbeizuführen, insbesondere für die Bereiche Tiefbau, Tunnelbau, Bergwerk (Kohle, Salz), Deponie-Abdichtung und Deich-Verfestigung.

Daneben können eine oder mehrere der offenbarten Massen problemlos und mit gutem Erfolg zur Beschichtung und/oder Imprägnierung von Gegenständen und Materialien, vorzugsweise von Beton, Mauerwerk, Holz, Gips, Natur- oder Kunstfasergeweben, Isolierplatten und dergleichen verwendet werden. Dadurch können nicht nur die physikalischen Festigkeitsparameter einiger der behandelten Materialien verbessert werden, sondern insbesondere auch deren chemische Belastbarkeit bzw. Widerstandsfähigkeit. Auch ihre Feuerfestigkeit wird dadurch entscheidend verbessert, was speziell im Bereich des Hochbaus von besonderem Vorteil ist.

Ähnliches gilt für den Fall, dass eine oder mehrere der erfindungsgemässen Massen zur Verstärkung geschäumter Bauteile durch Imprägnierung, vorzugsweise durch Tauchen der Bauteile in die Masse, insbesondere in Verbindung mit Vakuumverfahren, eingesetzt wird.

Schliesslich kann man die eine oder andere der erfindungsgemässen Massen auch zur Produktion von feuerfesten Kitten und feuerfesten Klebern verwenden.

Es ist aber auch möglich, eine oder mehrere der erfindungsgemässen Massen zur Produktion von gegossenen, gepressten, extrudierten und/oder spritzgegossenen Formkörpern in massiver, nicht expandierter oder in geschäumter, expandierter Form, einzusetzen. Solche Formkörper können durch übliche Verfahren wie Pressen, Formgiessen, Blasformen, Extrudieren, Spritzgiessen und dergleichen, erhalten werden. Allesamt zeichnen sie sich durch besondere chemische Widerstandsfähigkeit aus und können daher - neben ihrer Verwendbarkeit als z.B. Füllmaterial in Verpackungen - insbesondere für Anwendungen im Freien (z.B. Schutzabdeckungen, Grablichter, Gefässe, Dekorgegenstände, etc.) oder in chemischen Anlagen als z.B. oberflächenvergrössernde Füllkörper erzeugt und verwendet werden.

Im nachfolgenden wird die Erfindung anhand von Beispielen weiter erläutert. Die Erläuterungen dienen ausschliesslich der besseren Verständlichmachung der Erfindung und erlauben keinerlei Rückschlüsse auf eine Einschränkung der Erfindung auf die angeführten Beispiele.

### Beispiel 1: Grundzusammensetzung von erfindungsgemässen Massen auf Wasserglasbasis

In der folgenden Tabelle 1 ist ein Beispiel für erfolgreich einsetzbare Grundzusammensetzungen der erfindungsgemässen Masse angegeben:

**Tabelle 1**

| allgemein Gew.% | für Dichtungszwecke bevorzugt Gew.% | MATERIAL |
|---|---|---|
| 30-95 | 75-90 | Natrium-Wasserglas (26,8 Gew% SiO₂ + 8,2% Na2O = 35% Feststoff; 65% Wasser, ) |
| 0-12 | 0-6 | Verflüssiger, z.B. Silan-Emulsion (WS 431, Degussa) |
| 5-20 | 10-20 | Propylencarbonat (schneller Härter) + ggf. Ethylencarbonat (schneller Härter) + DACS-Mischung (Härtungsverzögerer) |
| 0-12 | 0 | Thixotropiemittel, z.B. Bentonit (OPTIGEL^{(R)}CK von Süd-Chemie; ) |
| 0-60 | 0-2 | Füllstoffe, z.B. Quarzsand, Quarzmehl + andere Zusätze, z.B. Entschäumer, Gleitmittel, Farbmittel |
| 100.0 | 100.0 | |

Für Anwendungszwecke als eine Art Wasserglasmörtel in einem einstufigen Anwendungsverfahren (z.B. Imprägnierung von Werkstoffen, Beschichtung von Gegenständen und Materialien, Versteifung von Baukonstruktionen, Abdichtung von Rissen, Löchern und undichten Rohrverbindungen von aussen, Formkörperherstellung, etc.), kann die erfindungsgemässe Masse wie folgt hergestellt werden:

Die Komponente A (Wasserglas) wird, gegebenenfalls zusammen mit dem Verflüssiger (z.B. Silan-Emulsion WS 431) vorgelegt. Anschliessend wird - falls erforderlich - Bentonit und danach die Komponente B, d.h. der Härter (z.B. Propylencarbonat, gegebenenfalls im Gemisch mit Ethylencarbonat) zusammen mit dem Härtungsverzögerer (z.B. DACS-Mischung) unter starkem Rühren eingearbeitet. Falls notwendig, kann auch ein geeigneter Entschäumer zugemischt werden. In manchen Fällen kann es von Vorteil sein, der A-Komponente auch Farbmittel zuzumischen, beispielsweise zur Erzielung besonderer Effekte bei Beschichtungen oder bei der Formkörperherstellung. Die Herstellung erfolgt im Regelfall bei Raumtemperatur. Es kann im System aufgrund der exothermen Reaktion eine Temperaturerhöhung entstehen, die maximal 40-50°C beträgt.

Danach kann die Masse innerhalb ihrer Topfzeit bearbeitet und für die oben genannten Zwecke appliziert oder geformt (z.B. durch Giessen, Pressen, Extrudieren, Spritzgiessen etc.) werden. Die erfindungsgemässe Masse zeichnet sich unter anderem durch die folgenden Produkteigenschaften vorteilhaft aus: sie hat einen geringen Schwund, ist temperaturbeständig bis 900°C, nicht brennbar, wasser- und säurefest, sowie laugenbeständig. Insbesondere bei fortwährendem Kontakt mit Feuchtigkeit nach dem Aushärten der Masse bleibt auch eine gewisse Restflexibilität erhalten, sodass die Masse in der Lage ist, feine Risse, die durch Druck und/oder Zugbelastung entstehen können, von selbst auszufüllen.

Die gemäss dieser Ausführungsform vorgeschlagene, gleichzeitige Verwendung eines Thixotropiemittels (z.B. Bentonit) und eines Verflüssigers (z.B. Silan-Emulsion) trägt zwar ebenfalls zur Erzielung der obigen Eigenschaften bei, wirkt sich aber insbesondere vorteilhaft bei der Verarbeitung aus, beispielsweise beim Arbeiten über Kopf.

Für die Anwendung in zweistufigen Verfahren, insbesondere zum Dichten von Leckagen in Kanälen und sonstigen Rohrleitungen, sowie zur Bodenverfestigung, sind auch die zusatzarmen oder gänzlich zusatzfreien Wasserglasmassen der zweiten Spalte von Tabelle 1 bestens geeignet. Durch das Wegfallen von Rührvorgängen ist die Verwendung von Entschäumern normalerweise unnötig. Füllstoffzusätze können beim Abdichten von kleinen Leckagen vielfach hinderlich sein, da sie ein vollständiges Ausfüllen des Lecks durch die Wasserglas-Dichtmasse unter Umständen stören. Andererseits ist im Falle von umgebendem Erdreich oder Mauerwerk ausserhalb des Kanals bzw. der Rohrleitung meistens ausreichend Füllmaterial vorhanden, sodass die Dichtmasse beim Durchtritt durch die Lecköffnung damit in Kontakt kommt, rasch härtet und dabei von aussen einen Dichtwulst rund um die Öffnung bildet, wodurch weiterer, unnötiger Durchtritt der Chemikalien der Dichtmasse nach aussen verhindert wird.

Durch Variation der Ingredienzien des Härtersystems (B-Komponente) können je nach Anwendungszweck Topfzeiten zwischen 10 Sekunden und mehr als einer Stunde eingestellt werden. Siehe dazu auch Tabelle 2.

### Beispiel 2: Variation des Verhältnisses Härter/Härtungsverzögerer

Die in diesem Ausführungsbeispiel verwendet Masse setzt sich zusammen aus: 31.5 Gew.% Wasserglas-Trockensubstanz (davon 26.8 Gew.% Kieselsäure), 58.5 Gew.% Wasser und 10 Gew.% Härter/Härtungsverzögerer. Die in Tabelle 2 angeführten Mischungen aus Härter und Härtungsverzögerer ergaben bei 20°C Reaktionszeiten (Topfzeiten) bis zum Einsetzen des Gelierens zwischen wenigen Sekunden und mehr als einer Stunde.

**Tabelle 2**

| **schneller HÄRTER / HÄRTUNGSVERZÖGERER** | **TOPFZEIT** bzw. **GELIERBEGINN** |
|---|---|
| 70% Ethylencarbonat | < 15 sec. |
| 30% Propylencarbonat | |
| 50% Ethylencarbonat | 15 sec. |
| 50% Propylencarbonat | |
| 100% Propylencarbonat | 30 sec. |
| 50% Propylencarbonat | 2 min. |
| 50% DACS-Mischung | |
| 25% Propylencarbonat | 7 min. |
| 75% DACS-Mischung | |
| 20% Propylencarbonat | 10 min. |
| 80% DACS-Mischung | |
| 10% Propylencarbonat | 15 min. |
| 90% DACS-Mischung | |
| 5% Propylencarbonat | 30 min. |
| 95% DACS-Mischung | |
| 100% DACS-Mischung | 60-90 min. |

### Beispiel 3: Verfahren zur Abdichtung einer Leckage

### Einzelkomponenten (wie in Beispiel 1):

Komponente A, der eigentliche Träger des Systems, ist ein speziell formuliertes, rein anorganisches und hochkieselsäurehaltiges (26.8 Gew.%) Natriumsilikat mit geringer Viskosität (ca. 50 mPa·s bei T = 20°C); der hohe Kieselsäureanteil macht das Produkt sehr klebrig - bei nicht zu niedriger Temperatur bleibt das Material dennoch sehr gut fliess- bzw. kriechfähig.

Komponente B, der Härter bestehend aus 90 Gew.% schnellem Propylencarbonat-Härter und 10 Gew.% langsamem Härtungsverzögerer (DACS-Mischung wie in Beispiel 1 und 2), ist niedrigviskos (ca. 5 mPa·s/20°C) und mit der richtigen Temperatur schnell kriechfähig auf das Silikat eingestellt.
Beim Zusammentreffen der Komponenten A und B polymerisiert das System innerhalb von ca. 30 Sekunden; bei Temperaturen über + 20 °C ist die Reaktion noch schneller - Temperaturen bis unter + 10° C machen das System entsprechend langsamer.

### Wirkungsweise:

Die Komponente A ist ein für die Kanalabdichtung hervorragend geeignetes Silikat. Beim Fluten des undichten Kanalabschnittes verliert sich das Material nicht wie Wasser im Erdreich, sondern bleibt durch seine hohe Klebrigkeit an der Aussenseite der Leckage hängen, verfüllt undichte Muffen und/oder Hohlräume im Erdreich. Gleichzeitig ist das Silikat aber sehr fliess- und kriechfähig und eignet sich daher auch zum Verfüllen von feinen Haarrissen.

Das Silikat bildet - unter Einwirkung eines leichten, hydrostatischen Überdruckes von ca. 0.5 bis 2 m Wassersäule - um die Leckage herum einen gleichmässigen Polster. Zur Erzielung bester Ergebnisse ist vorzugsweise darauf zu achten, dass die Komponente A beim ersten Flutvorgang lange genug geflutet bleibt, damit die getränkte Fläche um die Leckage herum gross bzw. tief genug ist, um den Härter (Komponente B) möglichst komplett aufzunehmen und auch den Nebeneffekt des Einbindens kontaminierten Erdreiches zu erzielen. Mit nachlassendem bzw. endendem hydrostatischem Druck bleibt die Komponente A (Wasserglas) im Erdreich stehen/hängen und ist zur Aufnahme des nachfolgenden Härters (Komponente B) bereit.

Die Mischung aus schnellem Härter und Härtungsverzögerer (Komponente B) ist extrem niedrigviskos eingestellt (ca. 5 mPa·s bei 20°C) und durchdringt das Wasserglas direkt, ohne das Material vor sich herzuschieben; der schnelle Härter macht diese Zusammensetzung der erfindungsgemässen Masse zum "Sekundensystem" - es reagiert praktisch sofort.

Die eigentliche Abdichtung erfolgt mit reinem, reagiertem Silikatgel, das sich in den Leckagen bzw. direkt um die verdichtete Schicht um die Leitung herum befindet. Die Klebrigkeit von der Wasserglas-Komponente bildet eine verdichtete Schicht um die Leitung, die als gehärtetes Silikatgel eine feste, je nach Grösse der Leckage mehrere Millimeter bis Zentimeter dicke Ummantelung bildet. Das vorhandene Konglomerat aus Erdreich/Sand/Kies dient als Widerlager für das Dichtmaterial in den Leckagen und die Ummantelung.

Durch die immer vorhandene Erdfeuchte bzw. die Feuchte in den Leitungen kann unter günstigen Voraussetzungen das System bedingt reaktiv bleiben, d.h. evtl. auftretende Haarrisse durch Erschütterungen könnten im System durch flexibles, gelartiges Ausweichen der Dichtungsmasse selbstheilend verfüllt werden. Versuche haben immer wieder gezeigt, dass verfestigtes Material in Rissen und neu verfüllten Muffen mit einfachen Methoden nicht undicht zu machen war und auch bei kleineren Erschütterungen intakt blieb.

Das "Sekundensystem" benötigt ca. 30 Sekunden bis zur einsetzenden Dichtigkeit einer Leitung. Während dieser Zeitspanne dringen bis zu ca. 20 % Härter in die A-Komponente ein - also bis zu 10 % mehr als das System zur Härtung braucht. Der Überschuss wird beim eventuell notwendigen 2. Flutvorgang sofort von der A-Komponente zur Reaktion benutzt. Deshalb entsteht in der Regel beim 2. Fluten des Härters oftmals kein Verbrauch mehr.

Dass mit dem System bei grösseren Leckagen mehr als 1 Flutversuch notwendig wird, hängt damit zusammen, dass wässrige Systeme schrumpfen. Werden solche Systeme z.B. mit Sand oder anderen Füllstoffen gefüllt, reduziert sich der Schrumpf auf ein Minimum.

Da in den Leckagen keine Füllstoffe vorhanden sind, schrumpft das Silikatgel - je nach Materialtemperaturen - nach ca. 5-10 Minuten.

In Abhängigkeit zur Grösse der Leckage kann deshalb ein zweiter Flutvorgang notwendig sein, der dann aber die Leitung vollständig dichtet, da damit nur noch der Schrumpfriss verfüllt werden muss.

Das System ist ausserordentlich beständig gegen Auslaugung oder chemische Zersetzung, es ist beispielsweise auch beständig gegen Schwefelsäure.

## Patentansprüche

1. Masse auf Wasserglasbasis bestehend aus Komponenten A und B, mit mindestens zwei verschiedenen Härtern, und gegebenenfalls weiteren Zusätzen, welche folgende Bestandteile enthält:
a) in Komponente A Wasserglas aus Alkalisilikat, vorzugsweise reines Natriumwasserglas, mit einem Molverhältnis SiO₂:Alkalioxid von 2.1 - 4;
b) in Komponente B mindestens einen schnell wirkenden organischen Härter aus der Gruppe der Ester, Lactone, Lactame, anorganischen oder organischen Säuren, Säureanhydride, Nitrile, Säureamide, und Säurechloride, vorzugsweise mindestens einen zyklischen Kohlensäureester aus der Gruppe Ethylencarbonat, Propylencarbonat und Butylencarbonat, sowie zusätzlich als Härtungsverzögerer mindestens einen anderen, langsamer wirkenden Härter aus derselben Gruppe;
c) gegebenenfalls Füllstoffe und weitere Zusätze; und
d) einen Gesamtwassergehalt von 10-60 Gew.%,
**dadurch gekennzeichnet, dass** die Masse einen Kieselsäureanteil von 7-42, vorzugsweise 12-24 Gew.% aufweist, und als Härtungsverzögerer mindestens einen Dialkyldicarbonsäureester, insbesondere Dimethylsuccinat, Dimethylglutarat und/oder Dimethyladipat enthält.

2. Masse nach Anspruch 1, dadurch gekennzeichnet, dass die Komponente A bei 20°C eine Viskosität von 20-100 mPa·s, vorzugsweise 40-60 mPa·s, und die Komponente B von 1-10 mPa·s, vorzugsweise 4-6 mPa·s, aufweist.

3. Masse nach Anspruch 1 oder 2, dadurch gekennzeichnet, dass schnelle(r) Härter und Härtungsverzögerer in einem Gewichtsverhältnis von 1:0.05 bis 1:50 zueinander vorliegen.

4. Masse nach einem oder mehreren der vorhergehenden Ansprüche, dadurch gekennzeichnet, dass der Härtungsverzögerer aus einer Mischung von 15-25 Gew.% Dimethylsuccinat, 55-65 Gew.% Dimethylglutarat und 12-23 Gew.% Dimethyladipat besteht.

5. Masse nach einem oder mehreren der vorhergehenden Ansprüche, dadurch gekennzeichnet, dass sie - bezogen auf 100 GWT Wasserglas (gerechnet als Trockensubstanz) - 90-350 GWT, vorzugsweise 150-230 GWT, Wasser und 15-125 GWT, vorzugsweise 25-75 GWT, Härter inklusive Härtungsverzögerer enthält.

6. Masse nach einem oder mehreren der vorhergehenden Ansprüche, dadurch gekennzeichnet, dass in Komponente B Härter und/oder Härtungsverzögerer in Pulverform, gegebenenfalls adsorbiert auf einem geeigneten Trägermaterial wie z.B. Sipernat® (hochdisperse Kieselsäure), vorliegen.

7. Masse nach Anspruch 6, dadurch gekennzeichnet, dass Trägermaterial und Härter bzw. Härtungsverzögerer im Verhältnis von 50 Gew.% Härter und/oder Härtungsverzögerer zu 50 Gew.% Trägermaterial eingesetzt werden.

8. Masse nach einem oder mehreren der vorhergehenden Ansprüche, dadurch gekennzeichnet, dass sie ausserdem - auf 100 GWT Wasserglas (als Trockensubstanz) bezogen - zwischen 0 und 115 GWT, vorzugsweise etwa 10-60 GWT eines Verflüssigers, insbesondere einer Silanemulsion, sowie gegebenenfalls zwischen 0 und 115, vorzugsweise etwa 20-85 GWT eines Thixotropiemittels, insbesondere eines mittels Alkali aktivierten Bentonits, und optional zwischen 0 und 570 GWT an weiteren Zusätzen, vorzugsweise an Entschäumer, Gleitmittel, Farbmittel und/oder Füllstoffen enthält.

9. Masse nach einem oder mehreren der vorhergehenden Ansprüche, dadurch gekennzeichnet, dass sie ausserdem, auf 100 GWT Wasserglas (als Trockensubstanz) bezogen, etwa 15-85, vorzugsweise etwa 40-60 GWT eines Gleitmittels, insbesondere feinst disperses TiO₂, enthält.

10. Masse nach einem oder mehreren der vorhergehenden Ansprüche, dadurch gekennzeichnet, dass sie ausserdem mindestens einen Füllstoff enthält, vorzugsweise bestehend aus einer Mischung von Quarzsand und Quarzmehl, gegebenenfalls in einem Verhältnis von 7:1 bei Verwendung von reinem Kaliwasserglas bzw. etwa 7:5 bei Verwendung von Natrium-Kalium-Wasserglas.

11. Verfahren zur Herstellung und Härtung einer Masse auf Wasserglasbasis, **dadurch gekennzeichnet, dass** man
a) als Komponente A Wasserglas, vorzugsweise reines Natriumwasserglas, mit einem Molverhältnis SiO₂:Alkalioxid von 2.1 bis 4 und vorzugsweise einer Viskosität (bei 20°C) von 20-100 mPa·s, insbesondere 40-60 mPa·s, gegebenenfalls unter leichtem Überdruck und/oder unter Rühren und/oder zusammen mit weiteren Zusätzen wie Verflüssiger, Thixotropiemittel, Gleitmittel, Füllstoffe, Entschäumer und dergleichen, vorlegt; und
b) anschliessend als Komponente B mindestens einen schnell wirkenden organischen Härter aus der Gruppe der Ester, Lactone, Lactame, anorganischen oder organischen Säuren, Säureanhydride, Nitrile, Säureamide, und Säurechloride, vorzugsweise mindestens einen zyklischen Kohlensäureester aus der Gruppe Ethylencarbonat, Propylencarbonat und Butylencarbonat, sowie gegebenenfalls zusätzlich
als Härtungsverzögerer mindestens einen anderen, langsamer wirkenden Härter aus derselben Gruppe, vorzugsweise mindestens einen Dialkyldicarbonsäureester, insbesondere Dimethylsuccinat, Dimethylglutarat und/oder Dimethyladipat, gegebenenfalls unter leichtem Überdruck und/oder stärkerem Rühren hinzufügt;
so dass sich ein Gesamtwassergehalt von 10-60 Gew.% und ein Kieselsäureanteil von 7-42, vorzugsweise 12-24 Gew.% ergibt und die Masse spontan, innerhalb einer für die Zusammensetzung der Masse und die gewählten Reaktionsbedingungen - insbesondere Reaktionstemperatur - typischen Reaktionszeit (Topfzeit) geliert und aushärtet.

12. Verfahren zur Herstellung und Härtung einer Masse auf Wasserglasbasis, insbesondere zum Dichten von Leckagen in Rohrleitungen, Kanälen und Behältnissen, **dadurch gekennzeichnet, dass**
i) als Komponente A Wasserglas, vorzugsweise reines Natriumwasserglas, mit einem Molverhältnis SiO₂:Alkalioxid von 2.1 bis 4 und vorzugsweise einer Viskosität (bei 20°C) von 20-100 mPa·s, insbesondere 40-60 mPa·s, gegebenenfalls zusammen mit einem Verflüssiger und/oder weiteren Zusätzen wie Thixotropiemitteln, Gleitmitteln, Füllstoffen und/oder sonstigen Zusätzen, unter einem Überdruck von 0,5-2 m Wassersäule in die Rohrleitung oder den Kanal eingebracht wird;
ii) überschüssiges Material nach einer gewünschten Haltezeit wieder entfernt wird;
iii) die Rohrleitung oder der Kanal mit Wasser gespült wird, zwecks Entfernung von unerwünschten Resten der Komponente A von den Innenwänden der Rohrleitung, des Kanals oder des Behältnisses;
iv) als Komponente B mindestens ein schnell wirkender organischer Härter aus der Gruppe der Ester, Lactone, Lactame, anorganischen oder organischen Säuren, Säureanhydride, Nitrile, Säureamide, und Säurechloride, vorzugsweise mindestens ein zyklischer Kohlensäureester aus der Gruppe Ethylencarbonat, Propylencarbonat und Butylencarbonat, sowie gegebenenfalls zusätzlich
als Härtungsverzögerer mindestens ein anderer, langsamer wirkender Härter aus derselben Gruppe, vorzugsweise mindestens ein Dialkyldicarbonsäureester, insbesondere Dimethylsuccinat, Dimethylglutarat und/oder Dimethyladipat,
gegebenenfalls unter einem Überdruck von 0,5-2 m Wassersäule, in die Rohrleitung, den Kanal oder das Behältnis eingebracht wird;
v) nach einer gewünschten Haltezeit überschüssiges Material entfernt wird; und
vi) die Schritte i) bis iii) oder i) bis v) gegebenenfalls wiederholt werden;
so dass die Masse spontan, innerhalb einer für die Zusammensetzung der Masse und die gewählten Reaktionsbedingungen typischen Reaktionszeit (Topfzeit) geliert und aushärtet und die Leckage dauerhaft und chemisch widerstandsfähig abdichtet.

13. Verfahren nach Anspruch 11 oder 12, dadurch gekennzeichnet, dass Härter und/oder Härtungsverzögerer in Pulverform, gegebenenfalls aufgebracht auf ein geeignetes Trägermaterial, insbesondere als Mischung von 50 Gew.% Härter und/oder Härtungsverzögerer und 50 Gew.% Sipernat® als Trägermaterial, zugesetzt werden.

14. Verfahren nach einem oder mehreren der Ansprüche 11 bis 13, dadurch gekennzeichnet, dass bei gegebenem Mengenverhältnis von Härter zu Härtungsverzögerer die Reaktionszeit durch eine Verringerung der Wassermenge und/oder eine Erhöhung der Konzentration an Härter und Härtungsverzögerer und/oder eine Erhöhung der Temperatur verringert wird.

15. Verfahren nach einem oder mehreren der Ansprüche 11 bis 14, dadurch gekennzeichnet, dass die Masse bezogen auf 100 GWT Wasserglas (als Trockensubstanz) 150-230 GWT, vorzugsweise rund 185 GWT, Wasser und 25-75 GWT, insbesondere rund 32 GWT, Härter inklusive Härtungsverzögerer enthält und durch Variation der Mengenverhältnisse von Härter(n) und Härtungsverzögerer(n) zueinander die Reaktionszeit innerhalb eines Bereiches von wenigen Sekunden bis mehr als eine Stunde gesteuert wird.

16. Verwendung einer Masse gemäss einem der Ansprüche 1 bis 10 und/oder hergestellt nach einem der Ansprüche 11 bis 15, zur dauerhaften und chemisch beständigen Abdichtung von undichten Rohrleitungen und Kanälen sowie von Behältnissen, insbesondere von Kesseln, Tanks, Brunnenschächten, Schwimmbecken und Gartenteichen, gegen Wassereinbruch und/oder Austritt von Flüssigkeit in die Umgebung.

17. Verwendung einer Masse gemäss einem der Ansprüche 1 bis 10 und/oder hergestellt nach einem der Ansprüche 11 bis 14, zur umweltverträglichen und chemisch beständigen Bodenverfestigung, insbesondere für die Bereiche Tiefbau, Tunnelbau, Bergwerk (Kohle, Salz), Deponie-Abdichtung und Deich-Verfestigung.

18. Verwendung einer Masse gemäss einem der Ansprüche 1 bis 10 und/oder hergestellt nach einem der Ansprüche 11 bis 14, zur Beschichtung und/oder Imprägnierung von Gegenständen und Materialien, vorzugsweise von Beton, Mauerwerk, Holz, Gips, Natur- oder Kunstfasergeweben, Isolierplatten und dergleichen.

19. Verwendung einer Masse gemäss einem der Ansprüche 1 bis 10 und/oder hergestellt nach einem der Ansprüche 11 bis 14, zur Verstärkung geschäumter Bauteile durch Imprägnierung, vorzugsweise durch Tauchen der Bauteile in die Masse, insbesondere in Verbindung mit Vakuumverfahren.

20. Verwendung einer Masse gemäss einem der Ansprüche 1 bis 10 und/oder hergestellt nach einem der Ansprüche 11 bis 14, zur Produktion von feuerfesten Kitten und feuerfesten Klebern.

21. Verwendung einer Masse gemäss einem der Ansprüche 1 bis 10 und/oder hergestellt nach einem der Ansprüche 11 bis 14, zur Produktion von gegossenen, extrudierten und/oder spritzgegossenen Formkörpern in massiver, nicht expandierter oder in geschäumter, expandierter Form.
